# EUROPÄISCHE PATENTSCHRIFT

(11) **EP 3 250 338 B1**
(45) Veröffentlichungstag und Bekanntmachung des Hinweises auf die Patenterteilung: **09.09.2020**
(21) Anmeldenummer: 16701978.5
(22) Anmeldetag: 01.02.2016
(51) Int. Cl.: B23B 29/034, B24B 33/08

(54) **BOHRKOPF, SPINDEL MIT BOHRKOPF UND VERFAHREN ZUM FEINBEARBEITEN**
DRILL HEAD, SPINDLE COMPRISING A DRILL HEAD, AND FINISHING METHOD
TÊTE DE PERÇAGE, BROCHE AVEC TÊTE DE PERÇAGE ET PROCÉDÉ D'USINAGE DE PRÉCISION

(30) Priorität: 30.01.2015 DE 102015101383
(43) Veröffentlichungstag der Anmeldung: 06.12.2017
(73) Patentinhaber: Mauser-Werke Oberndorf Maschinenbau GmbH, 78727 Oberndorf (DE)
(72) Erfinder: HINTERMEIER, Christoph, 1040 Wien (AT); RÖMPP, Wolfgang, 78739 Hardt (DE); WEIDINGER, Franz, 1220 Wien (AT); EMERSBERGER, Martin, 1120 Wien (AT); BERNREITER, Johannes, 2231 Strasshof (AT)
(74) Vertreter: Rumrich, Gabriele
(86) Internationale Anmeldenummer: PCT/EP2016/052062
(87) Internationale Veröffentlichungsnummer: WO 2016/120488

(56) Entgegenhaltungen:
- WO-A1-90/02010
- WO-A1-2015/181160
- DE-A1-102014 009 526

## Beschreibung

Die Erfindung betrifft einen Bohrkopf gemäß dem Oberbegriff des Patentanspruches 1, eine mit einem derartigen Bohrkopf ausgerüstete Spindel sowie ein Verfahren zum Beinbearbeiten von Werkstücken mittels eines derartigen Bohrkopfes.

Derartige Feinbohrköpfe werden beispielsweise beim Feinstbearbeiten von Innen- und Außenkonturen von Werkstücken verwendet, wobei diese Konturen beispielsweise zylinderförmig, exzentrisch oder unrund ausgeführt sein können.

Die DE 10 2007 017 800 A1 offenbart einen Feinbohrkopf, bei dem eine Spindel einen Membrankippkopf trägt, über den eine Werkzeugschneide in Radialrichtung verstellbar ist, um beispielsweise ein kleines Pleuelauge rund, oval und/oder in Kolbenbolzenlängsachse trompetenförmig oder in einer sonstigen geeigneten Form auszubilden. Die Verstellung des Membrankippkopfes erfolgt über ein linear verstellbares Betätigungselement, auch Zugstange genannt, über die ein mit einer Membran in Wirkverbindung stehender, die Werkzeugschneide tragender Werkzeugkopf mit Bezug zur Spindelachse gekippt werden kann, um die Radialverstellung zu bewirken. Die Zugstange ist in der Spindel gelagert und rotiert mit dieser mit. Ein rückwärtiger Endabschnitt der Zugstange ist aus der Spindel herausgeführt und dort über eine Lageranordnung an einem Schlitten abgelagert, der über einen Aktor verstellbar ist. Der Antrieb der Spindel erfolgt bei den bekannten Lösungen über einen Antriebsmotor, der parallel zur Spindelachse angeordnet ist und mit der Spindel über einen Riementrieb oder dergleichen in Wirkverbindung steht. Beim Feinstbearbeiten von Bohrungen muss die Verstelleinrichtung so ausgebildet sein, dass Durchmessertoleranzen ≤ IT6 eingehalten werden kann. Die Rundheit, Zylinderform oder Geradheit der zu bearbeitenden Flächen muss Werte bis zu max. 3µ erreichen. Des Weiteren müssen Profilformen und/oder definierte Ovalität im Bereich von wenigen µ hergestellt werden können.

Nachteilig bei diesen Lösungen ist, dass für den Spindelantrieb und auch die Lagerung der Zugstange ein erheblicher Bauraum und vorrichtungstechnischer Aufwand erforderlich ist. Ein weiterer Nachteil ist die Wärmeübertragung durch die Zugstange.

In der DE 44 01 496 C3 ist ein Feinbohrkopf zum Bearbeiten von runden, unrunden und/oder nicht zylinderförmigen Konturen beschrieben, bei dem die Verstellung einer Werkzeugschneide über einen Kopf mit Piezoaktoren erfolgt. Der Kopf ist bei dem bekannten Nachstellsystem in etwa U-förmig ausgebildet, wobei der Piezoaktor in einem feststehenden Schenkel des U-förmigen Kopfes angeordnet ist und auf einen elastisch auslenkbaren Schenkel wirkt, an dem die Werkzeugschneide gehalten ist. Durch Verformung der Piezoaktoren kann der elastisch auslenkbare Schenkel und somit die Werkzeugschneide in Radialrichtung mit einer Übersetzung verstellt werden. Nachteilig bei dieser Lösung ist, dass der Werkzeughalter mit einer Elastizität ausgeführt werden muss, sodass insbesondere bei hohen Zerspanungsleistungen die für eine Feinstbearbeitung erforderliche Qualität nicht gewährleistet werden kann. Ein weiterer Nachteil besteht darin, dass der U-förmig ausgebildete Werkzeughalter einen erheblichen Bauraum erfordert. Des Weiteren ist nachteilig, dass aufgrund des U-förmig ausgeführten Werkzeugkopfes insbesondere beim Nachstellen oder Betätigen eine Unwucht erzeugt wird, durch die die Bearbeitungsgenauigkeit weiter verschlechtert werden kann.

In der WO 2013/011027 A1 ist ein Feinbohrkopf offenbart, bei dem die Nachteile der vorbeschriebenen Lösungen dadurch ausgeräumt sind, dass ein piezoelektrischer Aktor auf einen Werkzeugschieber wirkt, an dem die Werkzeugschneide mittelbar oder unmittelbar gehalten ist. Dieser Werkzeugschieber ist entlang einer Führung durch Ansteuerung des Piezoaktors verfahrbar. Durch die Führung des Werkzeugschiebers wird die Stellbewegung des Piezoaktors in eine Zustellbewegung umgesetzt, wobei Ungenauigkeiten aufgrund einer einem vorbeschriebenen Stand der Technik erforderlichen Auslenkung von Bauelementen des Zustellkopfes vermieden werden können.

Nachteilig gegenüber dem vorbeschriebenen Festkörpergelenk ist jedoch, dass zur präzisen Herstellung der Führung und des in dieser Führung geführten Schiebers ein hoher vorrichtungs- und fertigungstechnischer Aufwand erforderlich ist.

Bei einer Feinbearbeitung einer ovalen Ausnehmung, die im Prinzip durch zwei Formelemente (großer, kleiner Durchmesser der Ellipse) gebildet ist, sind jedoch pro Umdrehungen des Werkzeugs zumindest zwei Steuerbewegungen erforderlich. Hinzu kommt, dass bei der Bearbeitung der Verschleiß der Werkzeugschneide kompensiert werden soll, so dass die Anforderungen an die Bahntreue und die Formtreue bei der Feinbearbeitung sehr hoch sind. Diese Anforderungen lassen sich mit den eingangs beschriebenen Bohrköpfen/Aussteuerwerkzeugen nicht oder nur mit ganz erheblichem Aufwand erreichen. Es zeigte sich, dass diese Systeme nicht über die notwendige Dynamik (Drehzahl x Anzahl der gewünschten Formelemente) verfügen, um entsprechend hohe Drehzahlen, beispielsweise 5000 Umdrehungen pro Minute zu realisieren.

Bei den beiden vorbeschriebenen piezoelektrisch betätigten Systemen ist es prinzipiell zwar möglich, eine entsprechende Dynamik abzubilden - die geforderte Formgenauigkeit lässt sich aufgrund der Ungenauigkeiten bei der Messung der Zustellbewegung oder durch die negativen Einflüsse wie Elastizität, Reibung oder Spiel der Führung der Werkzeugschneide (Lagerung über Membrankippkopf (DE 10 2007 017 800 A1); Führung des Schiebers (WO 2013/011027 A1) nicht erreichen. Auch die Ungenauigkeit bei der Erfassung der Zustellbewegung der Werkzeugschneide ist problematisch.

Demgegenüber liegt der Erfindung die Aufgabe zugrunde, einen Bohrkopf, eine mit einem derartigen Bohrkopf ausgeführte Spindel sowie ein Verfahren zum Ansteuern eines derartigen Bohrkopfes zu schaffen, bei dem die eingangs erläuterten Unzulänglichkeiten ausgeräumt sind.

Diese Aufgabe wird im Hinblick auf den Bohrkopf durch die Merkmale des Patentanspruches 1, im Hinblick auf die Spindel durch die Merkmalskombination des nebengeordneten Patentanspruches 13 und im Hinblick auf das Verfahren durch die Merkmale des weiterhin nebengeordneten Patentanspruches 15 gelöst.

Vorteilhafte Weiterbildungen der Erfindung sind Gegenstand der jeweiligen Unteransprüche.

Der erfindungsgemäße Bohrkopf zur Feinbearbeitung von Werkstücken hat ein Festkörpergelenk, an dem eine Werkzeugschneide gehalten ist, die mittels eines Piezoaktors in Zustellrichtung verstellbar ist. Erfindungsgemäß ist der Wirkabstand des Piezoaktors zu einem Gelenk des Festkörpergelenkes etwa gleich groß oder größer als der Abstand zwischen dem Gelenk und der Werkzeugschneide. Mit anderen Worten gesagt, der Hub des Piezoaktors wird ohne Übersetzung unmittelbar in eine Zustellbewegung der Werkzeugschneide umgesetzt, so dass entsprechend deren Hub durch den piezoelektrischen Antrieb abgedeckt ist.

Dies ist ein ganz erheblicher Unterschied zu denjenigen eingangs beschriebenen Lösungen, bei denen der Hub des Piezoaktors über Übertragungsmittel übersetzt wurde und somit zu einem deutlich größeren Hub der Werkzeugschneide führt, so dass sich Fehler bei der Ansteuerung des Piezoaktors um ein entsprechendes Vielfaches verstärkt auf die Zustellung der Werkzeugschneide auswirken. Bei dem Bohrkopf gemäß der WO 2013/011027 A1 ist zwar keine Übersetzung vorhanden, dennoch ist die Übertragung der Stellbewegung des Piezoaktors über eine Führung mit Schieber stets fehlerbehaftet, da - wie eingangs ausgeführt - diese Führung nicht vollständig spiel- und reibungsfrei sein kann.

Durch die erfindungsgemäße direkte Anbindung der Schneide an den Aktor mittels des Festkörpergelenkes und die damit einhergehende direkte Übersetzung von etwa 1:1 lässt sich die erforderliche Formgenauigkeit bei entsprechender Dynamik (Drehzahl x Anzahl der gewünschten Formelemente) einstellen. Ein weiterer Vorteil besteht darin, dass es durch die direkte Übersetzung (ca 1:1) sehr einfach möglich ist, die Verstellung der Werkzeugschneide in Radialrichtung zu erfassen, da der Hub des Piezoaktors demjenigen der Werkzeugschneide entspricht.

Bei einem bevorzugten Ausführungsbeispiel der Erfindung verläuft die Achse des Piezoaktors in etwa rechtwinklig zur Zustellrichtung.

Bei einem Ausführungsbeispiel der Erfindung wird über ein geeignetes Wegmesssystem der Aktorhub erfasst, so dass damit auch die Zustellbewegung der Werkzeugschneide bekannt ist. Dieses Wegmesssystem kann beispielsweise ein lineares Wegmesssystem sein, mit dem direkt die Bewegung des Piezoaktors erfasst wird.

Bei einem Ausführungsbeispiel der Erfindung ist es vorgesehen, das Festkörpergelenk oder der Piezoaktor über eine Vorspanneinrichtung in Rückstellrichtung zu beaufschlagen.

Eine derartige Vorspanneinrichtung kann wiederum ein Piezoaktor sein.

Die Dynamik und die Messgenauigkeit lassen sich weiter erhöhen, wenn die Elektronik zur Ansteuerung des Piezoaktors in Abhängigkeit von vorgegebenen Sollwerten, der Winkelposition der Spindel/Werkzeugschneide und/oder von dem vom Wegmesssystem erfassten Ist-Wert in den Bohrkopf oder in die Spindel integriert ist, so dass keine Drehübertragung der Signale von einer zentralen Maschinensteuerung (mit Ausnahme der Soll-Werte und ggfs. einer Verschleißkompensation) erforderlich ist.

Die Elektronik ist vorzugsweise mit einem Werkzeugregler ausgeführt, der in Abhängigkeit von dem Drehwinkelsignal und dem vorgegebenen Soll-Wert (abhängig von der zu bearbeitenden Werkstückkontur) den Piezoaktor mittels eines Antriebsverstärkers ansteuert, wobei der Weg des Aktors über das Wegmesssystem erfassbar ist und als Ist-Position zum Regler zurück gemeldet wird. D.h. der Lageregelkreis ist geschlossen und spindel- oder bohrkopfseitig ausgebildet.

Ein Werkzeughalter für das mit der Werkzeugschneide ausgeführte Werkzeug ist entsprechend der erfindungsgemäßen Lösung (direkte Übertragung des Aktorhubs auf die Werkzeugschneide mit einem Übersetzungsverhältnis von etwa 1:1) an dem Festkörpergelenk mittelbar oder unmittelbar befestigt.

Das Festkörpergelenk kann durch einen in etwa zylinderförmigen Grundkörper gebildet sein, an dem zwei gegenläufige, in Axialrichtung versetzte Radialschlitze ausgebildet sind, die das Gelenk ausbilden.

Dabei wird es bevorzugt, wenn sich ein Schlitz über die Achse des Grundkörpers hinaus erstreckt, wobei der andere Schlitz deutlich kürzer als der erstgenannte Schlitz ausgeführt ist.

Zur Erhöhung der Stellkräfte können zwei Piezoaktoren auf einem gemeinsamen Teilkreis im Abstand zu einem Gelenk des Festkörpergelenkes angeordnet sein.

Die erfindungsgemäße, mit dem Bohrkopf ausgeführte Spindel kann mit einer Schnittstelle zur Übergabe eines Sollwert-Signals an die oben genannte Elektronik ausgeführt sein, wobei diese Schnittstelle spindel- oder bohrkopfseitig vorgesehen ist. Über diese Schnittstelle wird das werkstückgeometrieabhängige Sollwert-Signal an die im Bohrkopf oder in der Spindel integrierte Elektronik übergeben (geschlossener Lageregelkreis).

Bei einem bevorzugten Verfahren zum Feinbearbeiten von Bohrungen mehrerer Werkstücke mittels des erfindungsgemäßen Feinbohrkopfes bzw. der erfindungsgemäßen Spindel erfolgt nach dem Feinbohren ein Glätten der Bohrung mittels eines Glättwerkzeuges. Erst im Anschluss an das Glätten erfolgt das Messen zur Überprüfung der Maßhaltigkeit der Bohrung des bearbeiteten Werkstückes. In dem Fall, in dem die Vermessung nicht im vorgegebenen Toleranzband liegt, erfolgt eine Korrektur der Werkzeugeinstellung des Bohrkopfes bevor das nächste Werkstück bearbeitet wird.

Dementsprechend handelt es sich um eine Post-Prozess-Messung, bei der die Einstellung des Bohrkopfes in Abhängigkeit vom Messergebnis nach dem Glätten erfolgt. Dies ist eine Abkehr von der herkömmlich geschilderten Herstellphilosophie, bei der eine Vermessung der Bohrungskontur nach jedem einzelnen Bearbeitungsschritt erfolgt und dementsprechend eine Korrektur der Werkzeugeinstellung sowohl beim Rollieren als auch beim Feinbohren durchgeführt wird.

Durch diese Vorgehensweise in Verbindung mit Verwendung des erfindungsgemäßen Bohrkopfes kann die Bearbeitung mit extremer Formtreue und Dynamik durchgeführt werden.

Im Folgenden wird ein bevorzugtes Ausführungsbeispiel der Erfindung anhand schematischer Zeichnungen näher erläutert. Es zeigen:
Figur 1 eine dreidimensionale Darstellung eines erfindungsgemäßen Bohrkopfes;
Figur 2 einen Längsschnitt durch den Bohrkopf gemäß Figur 1;
Figur 3 einen weiteren Längsschnitt durch den Bohrkopf gemäß Figur 1;
Figur 4 einen Schnitt entlang der Linie A-A in Figur 2;
Figur 5 einen Schnitt entlang der Linie B-B in Figur 3;
Figur 6 eine Prinzipdarstellung eines Festkörpergelenkes des Bohrkopfes gemäß Figur 1;
Figur 7 eine dreidimensionale Darstellung des Grundkörpers gemäß Figur 6;
Figur 8 den Bohrkopf gemäß Figur 1 mit abgenommenem Werkzeughalter;
Figur 9 eine Schnittdarstellung des werkzeugseitigen Bereiches des Bohrkopfes gemäß Figur 1;
Figur 10 ein Blockschaubild eines Lageregelkreises zur Ansteuerung des erfindungsgemäßen Bohrkopfes;
Figur 11 eine Prinzipdarstellung der Verfahrensschritte zur Feinbearbeitung einer Bohrung mittels eines erfindungsgemäßen Bohrkopfes und
Figur 12 eine Variante des Verfahrens gemäß Figur 11.

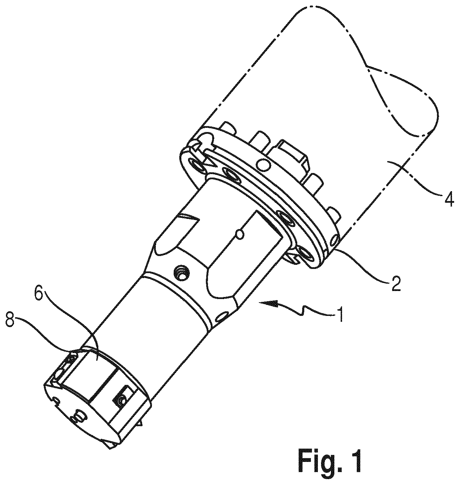

Figur 1 zeigt eine schematische dreidimensionale Ansicht eines erfindungsgemäßen Bohrkopfes 1, auch Feinbohrkopf oder Zustellkopf genannt. Dieser ist über einen Flansch 2 an eine strichpunktiert angedeutete Spindel 4 einer Werkzeugmaschine, bspw. einer Inversmaschine oder einer sonstigen Bearbeitungseinheit befestigt. Am Bohrkopf 1 ist - wie im Folgenden noch näher erläutert - ein Werkzeughalter 6 über eine Spanneinrichtung gehalten, an dem zumindest ein Werkzeug befestigt ist. Bei der Spannvorrichtung handelt es sich um eine Art invers ausgeführte HSK-Aufnahme, bei der der Hohlschaftkegel bohrkopfseitig und eine kegelförmige Aufnahme am Werkzeugträger 6 ausgebildet ist - dies wird im Folgenden noch näher erläutert.

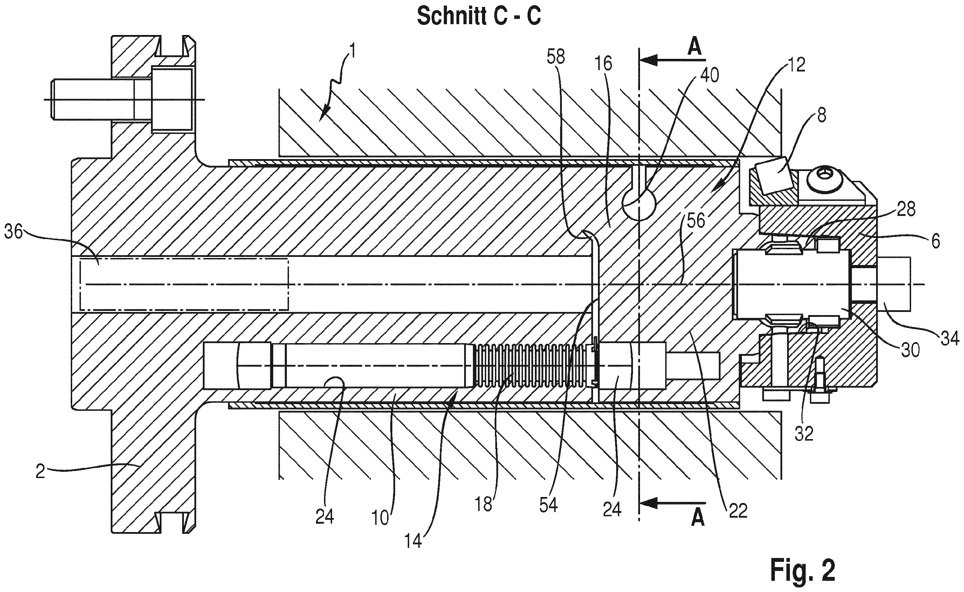

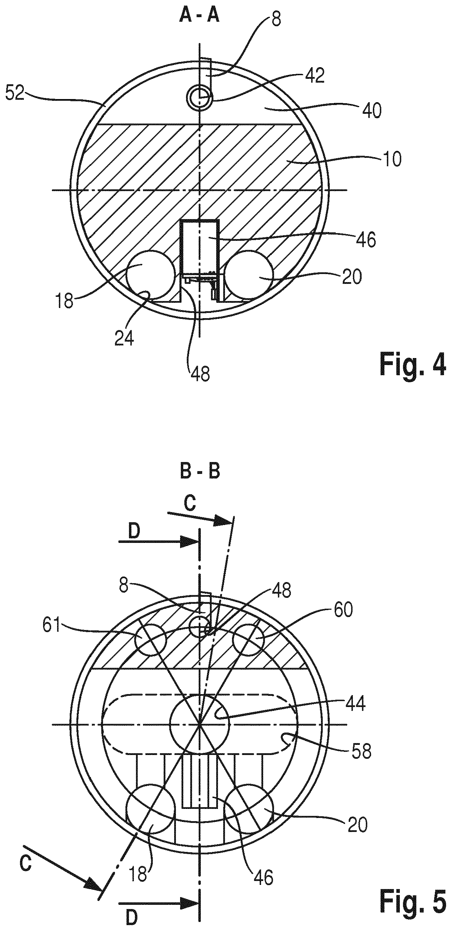

Figur 2 zeigt einen Längsschnitt des Bohrkopfes 1 entlang der Schnittlinie C-C in Figur 5. In dieser schematisierten Schnittansicht sieht man den an einem Grundkörper 10 ausgebildeten radial vorspringenden Flansch 2, über den der Bohrkopf 1 an der Spindel befestigt wird. Am Grundkörper 10 ist ein Festkörpergelenk 12 ausgebildet, an dem der Werkzeughalter 6 mit der Werkzeugschneide 8 gehalten ist. Zur Verstellung der Werkzeugschneide 8 ist im Grundkörper 10 eine Piezoaktoranordnung 14 aufgenommen, über die das Festkörpergelenk 12 direkt um sein Gelenk 16 schwenkbar ist. Auf die konkrete Ausgestaltung dieses Gelenkes 16 wird unten näher eingegangen.

Gemäß der Darstellung in den Figuren 4 und 5 hat die Piezoaktoranordnung 14 zwei Piezoaktoren 18, 20, von denen in der Darstellung gemäß Figur 2 lediglich einer (Piezoaktor 18) sichtbar ist. Diese Piezoaktoren können als so genannte Piezostacks (Piezostapel) ausgeführt sein, bei denen eine Vielzahl von Piezoelementen zum Ermöglichen eines möglichst großen Hubs mit dazwischen liegenden Elektroden zu einem Stapel zusammengefügt werden, wobei jeweils eine Plus- und eine Minus-Elektrode jedem Piezoelement zugeordnet ist, so dass die Vielzahl von Piezoelementen (Piezoscheiben) in einer elektrischen Parallelschaltung angesteuert werden. Demzufolge kann der Gesamthub jedes Piezoaktors durch die Vielzahl von gestapelten Piezoelementen bestimmt werden. Die Stellkraft kann im Wesentlichen durch die Anzahl der verwendeten Piezoaktoren je nach Anwendungsfall eingestellt werden. Da der Aufbau derartiger Piezostacks per se bekannt ist, kann auf weitere Erläuterungen verzichtet werden.

Gemäß der Darstellung in Figur 2 ist über das Gelenk 16 ein den Werkzeughalter 6 tragender Gelenkkörper 22 auslenkbar am Grundkörper 10 gehalten. Die Piezoaktoren 18, 20 sind jeweils in eine Aktorenaufnahme 24 des Grundkörpers 10 eingesetzt und greifen mit einem aus dem Grundkörper 10 auskragenden Aktorelementes 24 am Gelenkkörper 22 an, so dass dieses bei einem Hub der Piezoaktoren 18, 20 eine entsprechende Verschwenkung um das Gelenk 16 durchführt. Diese Verschwenkung resultiert in einer Zustellbewegung der Werkzeugschneide 8 in Radialrichtung.

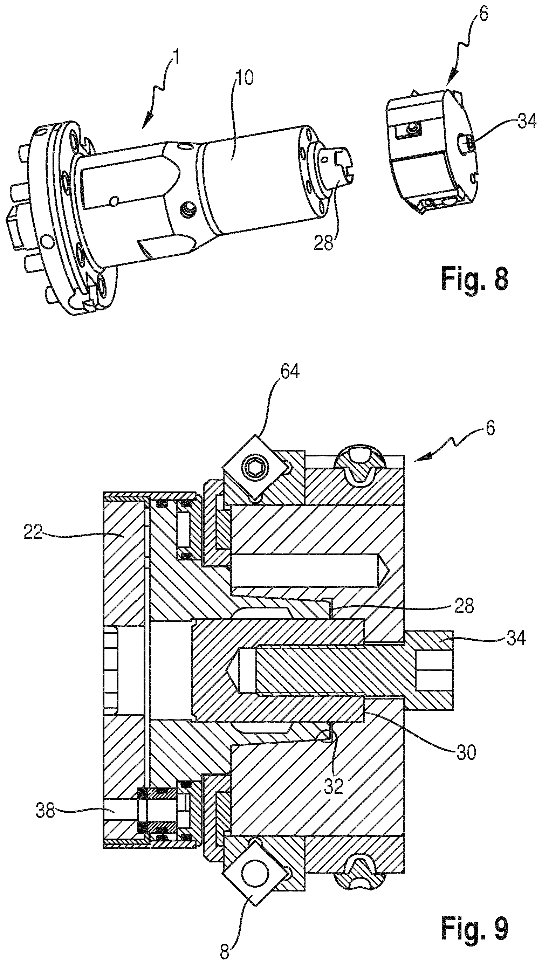

An dem Festkörpergelenk 12, genauer gesagt am Gelenkkörper 22 ist ein Hohlschaftkegel (HSK) 28 ausgebildet, der mittels einer Spannpatrone in Radialrichtung aufgeweitet werden kann, um eine kraftschlüssige Verbindung mit einem Hohlkegel 32 des Werkzeugträgers 6 zu bewirken. Die Spannpatrone 30 ist über eine Schraube 34 in Axialrichtung mit dem Werkzeugträger 6 verbunden. Weitere Einzelheiten werden im Zusammenhang mit der Figur 9 beschrieben.

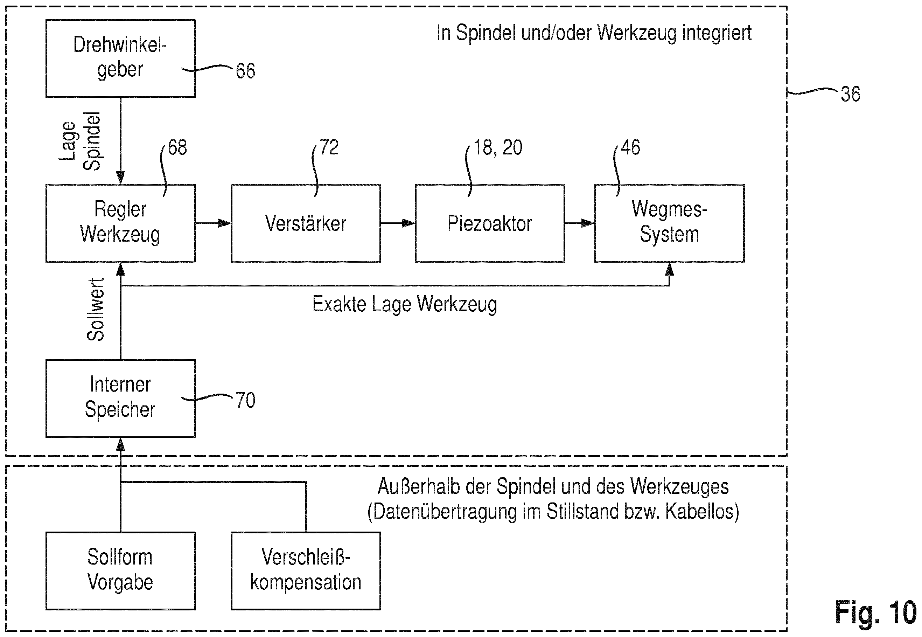

Die Ansteuerung der Piezoaktoranordnung 14 erfolgt über eine in den Bohrkopf 1 oder die Spindel 4 integrierte Elektronik 36, die einen Lageregelkreis ausbildet, der unten anhand Figur 10 erklärt wird.

Wesentlich ist, dass diese Elektronik 36 spindel- oder bohrkopfseitig integriert ist, so dass im Wesentlichen keine Drehübertragung von Signalen von der Werkzeugmaschine zur Spindel oder zum Werkzeug erfolgen muss.

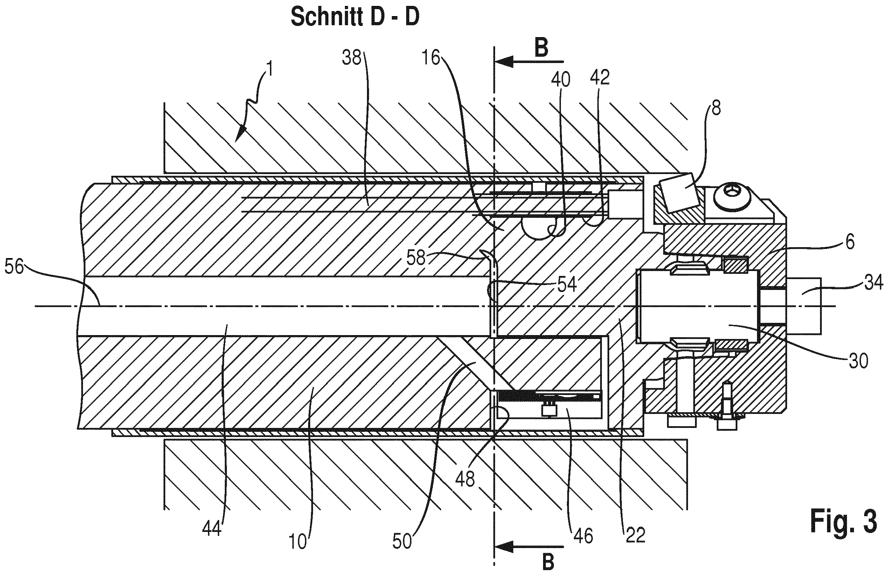

Figur 3 zeigt einen Schnitt durch den Bohrkopf 1 entlang der Linie D-D in Figur 5. In diesem Schnitt ist keiner der Piezoaktoren 18, 20 sichtbar - die Schnittebene verläuft jedoch durch einen Kanal 38, durch den hindurch Kühl-/Schmiermittel in den Bereich der zerspanenden Bearbeitung, d.h. in den Bereich der Werkzeugschneide 8 geführt wird.

Im Bereich eines das Gelenk 16 teilweise ausbildenden kurzen Radialschlitzes 40 ist der Kanal 38 durch ein Röhrchen 42 begrenzt, das diesen kreisbogensegmentförmig ausgebildeten Schlitz 40 durchsetzt, so dass auch bei radialer Zustellung und damit einer Verschwenkung des Gelenkkörpers 22 kein Kühl-/Schmiermittel in den Radialschlitz 40 eintreten kann.

Gemäß den Darstellungen in den Figuren 2 und 3 ist im Grundkörper 10 ein sich etwa axial erstreckender Raum 44 ausgebildet, durch den hindurch sich die Energieversorgungs- und Signalkabel zur Ansteuerung der Piezoaktoren und sonstiger elektrischer Verbraucher erstrecken.

Im Schnittverlauf gemäß Figur 3 ist ein Wegmesssystem 46 gezeigt, das in einer Aussparung 48 des Grundkörpers 10 aufgenommen ist und derart mit Bezug zu den beidseitig davon angeordneten Piezoaktoren 18, 20 positioniert ist, dass deren Hub oder der Hub des Gelenkkörpers 22 direkt erfassbar ist. Dieses Wegmesssystem 46 kann beispielsweise als lineares Wegmesssystem ausgeführt sein. Die Anbindung an die Steuerung 36 erfolgt wiederum über Signal- und Energieversorgungskabel, die über einen Schrägkanal 50 mit dem Raum 44 verbunden sind.

Figur 4 zeigt einen Schnitt entlang der Linie A-A in Figur 2. Sichtbar in diesem Schnittverlauf ist eine Hälfte der Umfangswandung des kurzen Radialschlitzes 40 und die beiden Piezoaktoren 18, 20, die im Grundkörper 10 aufgenommen sind und den Gelenckörper (Figuren 2 und 3) um das Gelenk 16 verschwenken. Im Grundkörper 10 ist des Weiteren die Aufnahme 48 für das Wegmesssystem 46 ausgebildet.

In dieser Schnittdarstellung sieht man auch eine den Grundkörper 10 umgreifende Verkleidung 52. In der Schnittdarstellung sichtbar ist auch ein Teil des Kanals 42 für das Kühl-/Schmiermittel.

Figur 5 zeigt einen Schnitt entlang der Linie B-B in Figur 3. Diese Schnittebene verläuft durch einen in den Figuren 2 und 3 dargestellten langen Radialschlitz 54, der sich vom Außenumfang weg in Radialrichtung bis über eine Achse 56 hinaus erstreckt. Der innen liegende Endabschnitt dieses langen Radialschlitzes 54 ist mit einem verrundeten Endabschnitt 59 ausgeführt, der das Gelenk 16 abschnittsweise begrenzt. Dargestellt in diesem Schnitt ist auch mit gestrichelten Linien eine radiale Erweiterung des Raumes 44, durch die eine Kammer 58 zur Aufnahme der Elektronik 36 und sonstiger zur Signal- und Energieversorgung erforderlicher Komponenten ausgebildet ist. In diesem Schnitt sichtbar sind auch zwei beidseitig vom Kanal 38 angeordneten weitere Versorgungskanäle 60, 61. In den Figuren 4 und 5 ist auch die Werkzeugschneide 8 angedeutet.

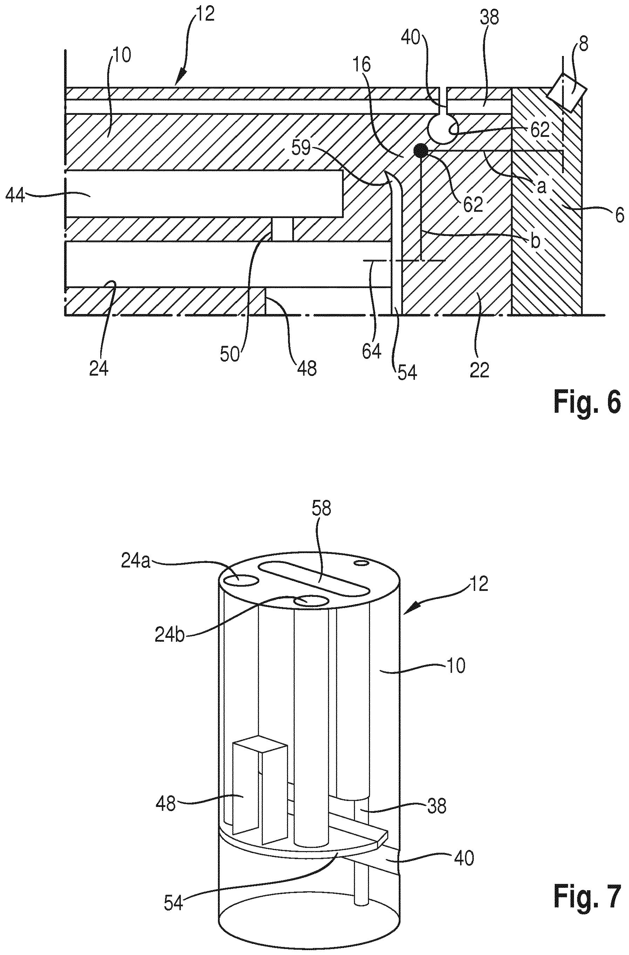

Figur 6 zeigt nochmals eine schematische Einzeldarstellung des Grundkörpers 10 mit dem daran angesetzten Werkzeugträger 6, an dem die Werkzeugschneide 8 gehalten ist. Dargestellt sind der kurze Radialschlitz 40 und der längere, etwa j-förmig ausgebildete lange Radialschlitz 54, die in Axialrichtung zu einander versetzt sind und das Gelenk 16 ausbilden, über das der Gelenkkörper 22 gelenkig am Grundkörper 10 des Festkörpergelenkes 12 angelenkt ist. Sichtbar sind auch die Aktorenaufnahme 24 und die Aufnahme 48 für das Wegmesssystem 46 sowie der axial verlaufende Raum 44, der über den Schrägkanal 50 mit der Aufnahme 48 des Wegmesssystems 46 verbunden ist. Der kurze Radialschlitz 40 hat zum Gelenk 16 hin eine etwa zylinderförmige Erweiterung 62, die durch eine Querbohrung gebildet ist, so dass der Übergangsbereich zum Gelenk 16 in ähnlicher Weise wie durch den gegenüber liegenden Endabschnitt 59 des langen Radialschlitzes 54 verrundet ist und die Kerbwirkung in diesem Bereich minimiert wird.

In der Darstellung gemäß Figur 6 ist die rechnerische Schwenkachse 62 des Gelenkes 16 eingezeichnet. Erfindungsgemäß ist der Abstand a dieser Schwenkachse 62 zur Werkzeugschneide 8 etwa gleich groß wie der Abstand b der Schwenkachse 62 zur strichpunktiert angedeuteten Wirklinie 64 der Piezoaktoren 18, 20. Daraus resultiert, dass der Hub der Piezoaktoren 18, 20 in etwa 1:1 in eine Radialauslenkung der Werkzeugschneide 8 umgesetzt wird. Die Piezoaktoren wirken direkt auf die am Gelenkkörper 22 gehaltene Werkzeugschneide 8, so dass die Verstellung mit hoher Dynamik erfolgt. Da über das Wegmesssystem 46 die Verstellbewegung der Werkzeugschneide 8 und auch der im Wesentlichen identische Hub der Piezoaktoren erfasst wird, kann die Ansteuerung der Werkzeugschneide 8 mit höchster Präzision erfolgen, wobei die Signalverarbeitung durch den geschlossenen Lageregelkreis und die in die Spindel 4 oder den Bohrkopf 1 integrierte Elektronik unterstützt wird.

Figur 7 zeigt eine dreidimensionale Darstellung des Grundkörpers 10. In der dort gewählten Perspektive ist die rückwärtige Kammer 58 zur Aufnahme der Elektronik sichtbar. Zu sehen sind auch die beiden Aktorenaufnahmen 24a, 24b für die Piezoaktoren 18, 20 und die Aufnahme 48 für das dazwischen liegende Wegmesssystem 46. Der Kanal 38 durchsetzt den Grundkörper 10 im Abstand zur Achse 56. Angedeutet in Figur 7 sind auch der als Radialeinschnitt ausgebildete kurze Radialschlitz 40 und der axial dazu versetzt ausgebildete lange Radialschlitz 54. Dabei erstrecken sich die Erweiterung 62 und der Endabschnitt etwa quer zur Achse 56 des Grundkörpers 10.

Dementsprechend ist das Festkörpergelenk 12 in sehr einfacher Weise aus einem zylinderförmigen Grundkörper 10 ausgebildet, an dem das Gelenk 16 durch die beiden axial versetzten und sich in Radialrichtung unterschiedlich weit in den Grundkörper 10 erstreckenden Schlitze 40, 54 ausgebildet ist. Auch die sonstigen Aufnahmebereiche für die Piezoaktoren 18, 20, das Wegmesssystem 46 und die Elektronik sowie die Durchführung des Kühl-/Schmiermittels können sehr einfach durch axial erlaufende Bohrungen, Ausnehmungen ausgebildet werden, deren Herstellung mit vergleichsweise geringem Aufwand möglich ist.

Figur 8 zeigt den Bohrkopf 1 mit abgenommenem Werkzeughalter 6. Man sieht den an den Grundkörper 10 angesetzten Hohlschaftkegel 28, auf den der Werkzeugträger 6 mit seinem Hohlkegel 32 (siehe Figuren 2, 3) aufgesetzt wird. Das Verspannen erfolgt dann über die Spannpatrone 30.

Figur 9 zeigt eine Schnittdarstellung des Werkzeugträgers 6, an dem die Werkzeugschneide 8 gehalten ist. Diametral zur Werkzeugschneide 8 ist bei dem Ausführungsbeispiel gemäß Figur 9 eine Vorbearbeitungsschneide 64 vorgesehen, die ebenfalls in an sich bekannter Weise mit dem Werkzeugträger 6 verschraubt ist. Dieser hat den genannten Hohlkegel 32, der kraft-/formschlüssig den Hohlschaftkegel 28 umgreift, der über die Spannpatrone 30 zum Spannen in Radialrichtung erweitert wird. Sichtbar ist auch der Kanal 38, durch den hindurch das Kühl-/Schmiermittel zur Werkzeugschneide 8 oder in entsprechender Weise zur Vorbearbeitungsschneide 64 geführt wird.

Figur 10 zeigt das Blockschaubild des durch die Elektronik 36 ausgebildeten Lageregelkreises.

Wie eingangs erläutert, ist diese Elektronik 36 in die Spindel 4 oder den Bohrkopf 1 integriert. Über einen spindelseitigen Drehwinkelgeber 66 wird die Lage der Spindel an einen Werkzeugregler 68 gemeldet. Der Soll-Wert, d.h. die Sollgeometrie der zu bearbeitenden Kontur wird maschinenseitig über eine Sollformvorgabe (Soll-Wert) zugeführt. Damit einhergehen Informationen zur Verschleißkompensation, die bei der Sollwertvorgabe berücksichtigt wird. Diese maschinenseitig zur Verfügung gestellten Signale werden im Stillstand der Spindel 4 oder kabellos über die NC-Steuerung an die Elektronik 36 übertragen und in einem internen Speicher 70 abgelegt. Aus diesem werden die Soll-Werte ausgelesen und in Abhängigkeit von der Spindellage über den Werkzeugregler 68 ein Ausgangssignal an einen Verstärker 72 abgegeben, der dieses Ausgangssignal in ein Steuersignal für die Piezoaktoren 18, 20 umwandelt. Deren Hub wird direkt über das Wegmesssystem 46 erfasst, so dass aufgrund der 1:1 Übersetzung damit auch die exakte Lage (Zustellbewegung) des Werkzeuges bekannt ist. Dieses Ist-Signal wird zum Werkzeugregler 68 zurückgeführt, so dass entsprechend ein geschlossener Lageregelkreis vorliegt, der eine hochdynamische Ansteuerung des Werkzeugs gewährleistet, wobei aufgrund der direkten Ansteuerung ohne Fehler erzeugende Zwischenelemente die geforderte Formgenauigkeit auch bei hohen Drehzahlen gewährleistet ist.

Die Fertigungsgenauigkeit bei der Serienproduktion lässt sich noch weiter verbessern, wenn das im Folgenden beschriebene Post-Prozess-Messverfahren verwendet wird, wie es in der DE 10 2014 107 461 der Anmelderin beschrieben ist. Die Offenbarung dieser Voranmeldung gehört vollinhaltlich zu derjenigen der vorliegenden Anmeldung, so dass nur einige zum Verständnis erforderliche Aspekte beschrieben werden und im Übrigen auf die Beschreibung der älteren Patentanmeldung verwiesen wird.

Piezoaktoren können systembedingt größere Kräfte im Sinne einer Verlängerung des Aktors als in Gegenrichtung aufbringen. Zur besseren Rückstellung kann der Aktor gegen eine Vorspanneinrichtung, bspw. einen weiteren Piezoaktor oder eine Rückstellfeder arbeiten. Diese Einrichtung kann bspw. im Gelenkkörper 22 abgestützt sein und diesen entgegengesetzt zur den Piezoaktoren 18, 20 in Rückstellrichtung beaufschlagen.

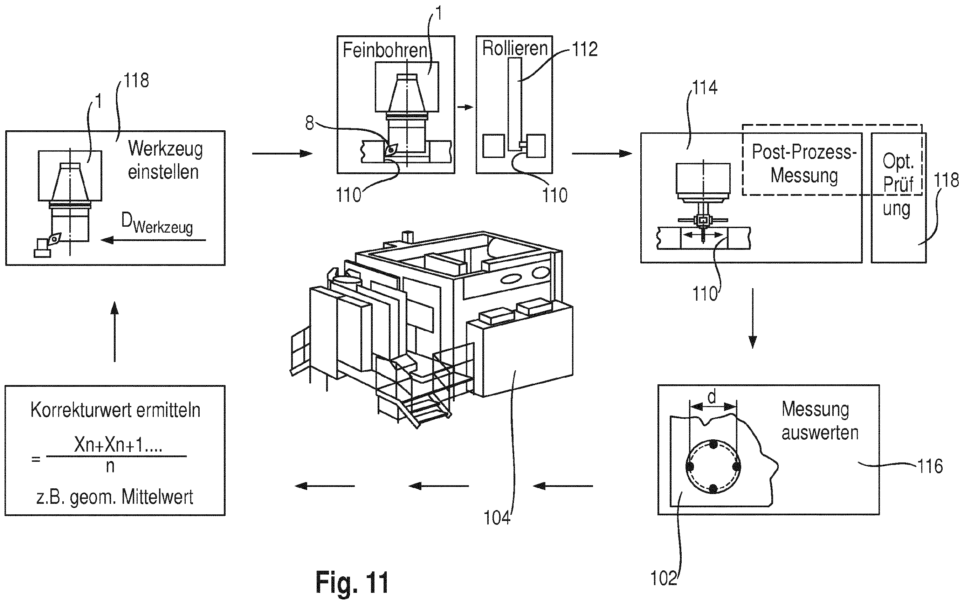

Figur 11 zeigt ein Schaubild zur Verdeutlichung des erfindungsgemäßen Verfahrens zum Feinbearbeiten von Bohrungen mehrerer Werkstücke, beispielsweise eines Kurbelgehäuses 102 oder einer Zylinderbohrung. Mittig ist eine Werkzeugmaschineneinheit dargestellt, die als Invers-Maschine 104 ausgebildet ist. Bei einer Werkzeugmaschine nach dem Invers-Konzept wird das Werkstück hin zu den am Maschinenrahmen gelagerten Werkstücken geführt. Die Invers-Maschine 104 hat zumindest einen an einer Spindel gehaltenen Bohrkopf 1 und/oder ein anderes zur Feinbearbeitung geeignetes Werkzeug, dessen Werkzeugschneide 8 vorzugsweise in Radialrichtung verstellbar ist, um die Bohrung 110 des Kurbelgehäuses 102 feinzubohren. Diese Bohrung 110 wurde zuvor nach einem herkömmlichen Bearbeitungsverfahren, beispielsweise durch Bohren bearbeitet. Die Invers-Maschine 104 ist des Weiteren mit einer nicht dargestellten Zentrierstation ausgeführt, über die das Werkstück 102 vor der Bearbeitung zentriert wird.

Die Invers-Maschine 104 hat des Weiteren ein Rollierwerkzeug 112 zum Glätten der feingebohrten Umfangsfläche der Bohrung 110. Die Invers-Maschine 104 kann prinzipiell mit mehreren Feinbohrköpfen und Rollierwerkzeugen ausgeführt sein, so dass entsprechend eine Vielzahl von Werkstücken gleichzeitig bearbeitbar ist.

Nach dem Glätten der Umfangsfläche der Bohrung mittels des Rollierwerkzeuges 12 wird das Werkstück 102 einer Messstation 114 zugeführt (Post-Prozess-Messung). Diese Messstation 114 ist mit Messeinrichtungen ausgeführt, um die Maßhaltigkeit der Bohrung 110 zu vermessen. Die Messstation 114 ist des Weiteren mit einer Auswerteeinheit 116 (Messrechner) ausgeführt, in der die Messwerte verarbeitet werden. Wie in Figur 11 angedeutet, kann die Messstation 114 zusätzlich noch mit einer Station 118 zur optischen Prüfung des Werkstückes bzw. der Bohrung 110 ausgeführt sein. Der Transport zwischen den einzelnen Stationen erfolgt vollautomatisch, beispielsweise über geeignete Handlingssysteme oder Roboterarme.

Die über die Auswerteeinheit 116 ermittelten Messwerte werden mit den vorgegebenen Sollwerten der Werkstückgeometrie verglichen. Für den Fall, dass die Messwerte von den Sollwerten abweichen, wird über die Auswerteeinheit 116 ein Korrekturwert ermittelt und dann entsprechend über eine Maschinensteuerung, der Bohrkopf 1 in Abhängigkeit vom Korrekturwert verstellt und mit dieser Werkzeugeinstellung das nächste Werkstück oder eine vorbestimmte Werkstückanzahl bearbeitet. Dieses Werkstück oder das nächste, nach Bearbeitung der vorbestimmten Werkstückanzahl anfallende Werkstück wird dann wieder in der vorbeschriebenen Weise vermessen und gegebenenfalls in Abhängigkeit von den Messwerten das Werkzeug eingestellt.

Dementsprechend erfolgt die Korrektur der Werkzeugschneide nach dem Feinbohren und Glätten auf der Basis der bei der Post-Prozess-Messung ermittelten Daten. Die Einstellung des Bohrkopfs 1 erfolgt dabei in Abhängigkeit von der sich beim Glätten einstellenden Aufweitung der Bohrung. Dieses Aufweitmaß wird beim Korrekturzyklus berücksichtigt, wobei angestrebt wird, den Durchmesser nach dem Feinbohren innerhalb des oberen Grenzwertes des Toleranzfensters zu halten, so dass beim Rollieren weniger Material umzuformen ist.

Bei der in Figur 11 dargestellten Vorgehensweise ist die Station 118 zur optischen Prüfung in das Maschinenkonzept integriert.

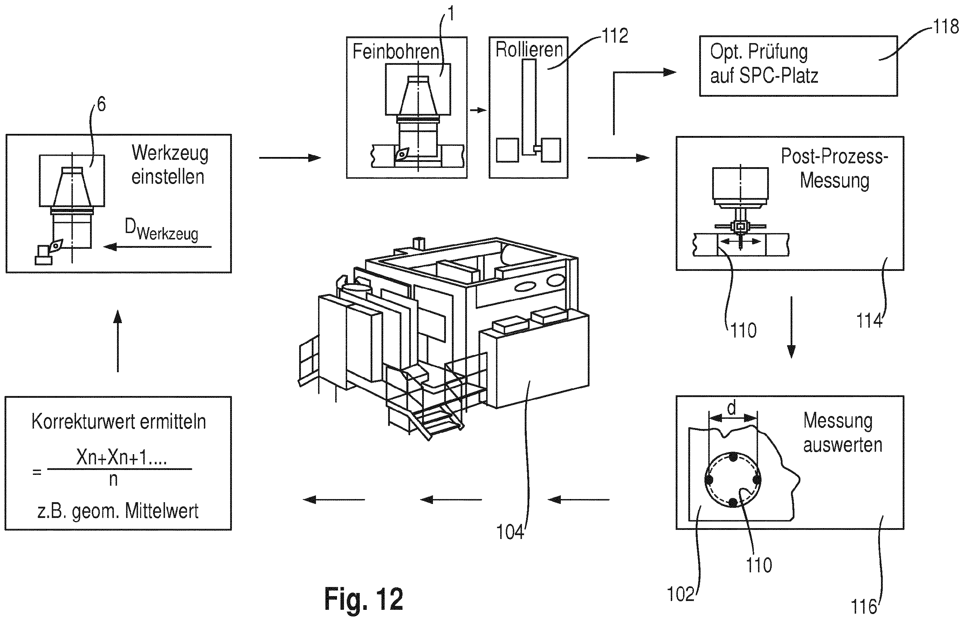

Figur 12 zeigt eine Variante, bei der die Station 118 zur optischen Prüfung auf einem eigenen SPC-Messplatz durchgeführt wird, der nicht in die Invers-Maschine integriert ist. Im Übrigen entspricht die Verfahrensweise gemäß Figur 12 derjenigen in Figur 11, so dass weitere Erläuterungen zu Figur 12 entbehrlich sind.

Offenbart sind ein Bohrkopf zur Feinbearbeitung von Werkstücken, eine mit einem derartigen Bohrkopf ausgeführte Spindel und ein Verfahren zum Bearbeiten von Werkstücken mittels eines derartigen Bohrkopfes. Dieser ist mit einem durch einen Piezoaktor betätigten Festkörpergelenk ausgeführt, an dem eine Werkzeugschneide gehalten ist. Erfindungsgemäß entspricht der Hub des Piezoaktors der Zustellbewegung der Werkzeugschneide.

### Bezugszeichenliste:

- 1: Bohrkopf
- 2: Flansch
- 4: Spindel
- 6: Werkzeughalter
- 8: Werkzeugschneide
- 10: Grundkörper
- 12: Festkörpergelenk
- 14: Piezoaktoranordnung
- 16: Gelenk
- 18: Piezoaktor
- 20: Piezoaktor
- 22: Gelenkkörper
- 24: Aktorenaufnahme
- 26: Aktorelement
- 28: Hohlschaftkegel
- 30: Spannpatrone
- 32: Hohlkegel
- 34: Schraube
- 36: Elektronik
- 38: Kanal
- 40: kurzer Radialschlitz
- 42: Röhrchen
- 44: Raum
- 46: Wegmesssystem
- 48: Aufnahme
- 50: Schrägkanal
- 52: Verkleidung
- 54: langer Radialschlitz
- 56: Achse
- 58: Kammer
- 59: Endabschnitt
- 60: Versorgungskanal
- 61: Versorgungskanal
- 62: Schwenkachse
- 64: Vorbearbeitungsschneide
- 66: Drehwinkelgeber
- 68: Werkzeugregler
- 70: Speicher
- 72: Verstärker
- 102: Kurbelwellengehäuse
- 104: Invers-Maschine
- 110: Bohrung
- 112: Rollierwerkzeug
- 114: Messstation
- 116: Auswerteeinheit
- 118: Station

## Patentansprüche

1. Bohrkopf zur Feinbearbeitung von Werkstücken, mit eine Werkzeugschneide (8), die an einem Festkörpergelenk (12) gehalten ist und mittels zumindest eines Piezoaktors (18, 20) in Zustellrichtung verstellbar ist, **dadurch gekennzeichnet, dass** der Wirkabstand (b) des Piezoaktors (18, 20) zu einem Gelenk (16) des Festkörpergelenkes (12) etwa gleich oder größer ist als der Abstand (a) zwischen dem Gelenk (16) und der Werkzeugschneide (8).

2. Bohrkopf nach Patentanspruch 1, wobei die Achse des Piezoaktors (18, 20) in etwa rechtwinklig zur Zustellrichtung verläuft.

3. Bohrkopf nach Patentanspruch 1 oder 2, mit einem Wegmesssystem (46) zur Erfassung der Zustellbewegung und/oder des Aktuatorhubs.

4. Bohrkopf nach Patentanspruch 1, wobei das Wegmesssystem im Bereich zwischen dem Piezoaktor (18, 20) und der Werkzeugschneide (8) angeordnet ist.

5. Bohrkopf nach einem der vorhergehenden Patentansprüche, mit einer Vorspanneinrichtung zur Beaufschlagung des Festkörpergelenkes (12) oder des Piezoaktors (18, 20) in Rückstellrichtung.

6. Bohrkopf nach Patentanspruch 5, wobei die Vorspanneinrichtung ein Piezoaktor ist.

7. Bohrkopf nach einem der vorhergehenden Patentansprüche, mit einer Elektronik (36) zur Ansteuerung des Piezoaktors (18, 20) in Abhängigkeit von vorgegebenen SollWerten, einer Winkelposition der Werkzeugschneide (8) und/oder dem vom Wegmesssystem (46) erfassten Ist-Wert.

8. Bohrkopf nach Patentanspruch 7, wobei die Elektronik (36) einen Werkzeugregler (68) hat, der in Abhängigkeit von dem Drehwinkelsignal und einem vorgegebenen Soll-Wert den Piezoaktor (18, 20) mittels eines Verstärkers (72) ansteuert, wobei der Weg des Piezoaktors (18, 20) über das Wegmesssystem (46) erfassbar ist und als Ist-Position zum Werkzeugregler (68) zurückgemeldet ist.

9. Bohrkopf nach einem der vorhergehenden Patentansprüche, mit einem Werkzeughalter (6) für ein die Werkzeugschneide (8) aufweisendes Werkzeug,

10. Bohrkopf nach Patentanspruch 9, wobei das Festkörpergelenk (12) den Werkzeughalter (6) trägt und das Gelenk (16) durch zwei gegenläufige Radialschlitze (40, 54) gebildet ist, die vorzugsweise in Axialrichtung versetzt sind.

11. Bohrkopf nach Patentanspruch 10, wobei sich ein längerer Radialschlltz (54) über eine Achse (56) des Bohrkopfes (1) hinaus erstreckt und der andere Radialschlitz (40) deutlich kürzer ausgebildet ist.

12. Bohrkopf nach einem der vorhergehenden Patentansprüche, wobei zwei Piezoaktoren (18, 20) auf einem gemeinsamen Teilkreis im Abstand zu einem Gelenk (16) des Festkörpergelenkes (12) angeordnet sind.

13. Spindel mit einem Bohrkopf nach einem der vorhergehenden Patentansprüche, wobei die Elektronik (36) In den Bohrkopf (1) oder in die Spindel (4) integriert ist.

14. Spindel nach Patentanspruch 13, mit einer Schnittstelle zur Übergabe eines Sollwert-Signals an die Elektronik (36), wobei die Schnittstelle spindel- oder bohrkopfseitig ausgebildet ist,

15. Verfahren zur Feinbearbeitung mehrerer Werkstücke mit den Schritten: Feinbohren einer Bohrung eines ersten Werkstückes mittels eines Bohrkopfes (1) nach einem der Patentansprüche 1 bis 12, Glätten der Bohrung mittels eines Glättwerkzeuges und mit einem Messschritt zur Überprüfung der Maßhaltigkeit der Bohrung des ersten Werkstückes und einer entsprechenden Bearbeitung der Bohrungen zumindest eines weiteren Werkstückes, wobei die Messung nach dem Glätten der Bohrung des ersten Werkstückes erfolgt und eine Korrektur der Werkzeugeinstellung des Bohrkopfes (1) in Abhängigkeit vom Messergebnis nach dem Glätten durchgeführt wird.

## Claims

1. Drill head for the precision machining of workpieces, comprising a tool blade (8) which is held on a solid-body joint (12) and by means of which at least one piezo actuator (18, 20) is adjustable in an advancing direction, **characterized in that** the effective distance (b) of the piezo actuator (18, 20) from a joint (16) of the solid-body joint (12) is approximately equal to or greater than the distance (a) between the joint (16) and the tool blade (8).

2. Drill head according to claim 1, wherein the axis of the piezo actuator (18, 20) extends approximately at right angles to the advancing direction.

3. Drill head according to claim 1 or 2, comprising a travel measuring system (46) for detecting the advancing movement and/or the actuator stroke.

4. Drill head according to claim 1, wherein the travel measuring system is arranged in the region between the piezo actuator (18, 20) and the tool blade (8).

5. Drill head according to any one of the preceding claims, comprising a biasing means for acting on the solid-body joint (12) or the piezo actuator (18, 20) in the return direction.

6. Drill head according to claim 5, wherein the biasing means is a piezo actuator.

7. Drill head according to any one of the preceding claims, comprising an electronic unit (36) for actuating the piezo actuator (18, 20) as a function of predefined setpoint values, an angle position of the tool blade (8) and/or the actual value detected by the travel measuring system (46).

8. Drill head according to claim 7, wherein the electronic unit (36) has a tool controller (68) which actuates the piezo actuator (18, 20) by means of an amplifier (72) as a function of the rotation angle signal and a predefined setpoint value, wherein the travel of the piezo actuator (18, 20) can be detected by way of the travel measuring system (46) and is reported back to the tool controller (68) as an actual position.

9. Drill head according to any one of the preceding claims, comprising a tool holder (6) for a tool that has the tool blade (8).

10. Drill head according to claim 9, wherein the solid-body joint (12) carries the tool holder (6), and the joint (16) is formed by two opposite radial slots (40, 54) which are preferably offset in the axial direction.

11. Drill head according to claim 10, wherein a longer radial slot (54) extends beyond an axis (56) of the drill head (1), and the other radial slot (40) is considerably shorter.

12. Drill head according to any one of the preceding claims, wherein two piezo actuators (18, 20) are arranged on a common pitch circle at a distance from a joint (16) of the solid-body joint (12).

13. Spindle having a drill head according to any one of the preceding claims, wherein the electronic unit (36) is integrated in the drill head (1) or in the spindle (4).

14. Spindle according to claim 13, having an interface for transmitting a setpoint value signal to the electronic unit (36), wherein the interface is formed on the spindle or on the drill head.

15. Method for the precision machining of multiple workpieces, comprising the steps: precision-drilling a bore in a first workpiece by means of a drill head (1) according to any one of claims 1 to 12, smoothing the bore by means of a smoothing tool, and comprising a measuring step for checking the dimensional accuracy of the bore in the first workpiece and correspondingly machining the bores of at least one further workpiece, wherein the measurement takes place after the smoothing of the bore in the first workpiece, and the tool setting of the drill head (1) is corrected as a function of the measurement result after the smoothing.

## Revendications

1. Tête de perçage pour l'usinage de précision de pièces, avec une arête de coupe (8) qui est maintenue sur une articulation solide (12) et qui peut être réglée dans la direction d'avance au moyen d'au moins un actionneur piézoélectrique (18, 20), **caractérisée en ce que** la distance active (b) de l'actionneur piézoélectrique (18, 20) par rapport à une articulation (16) de l'articulation solide (12) est approximativement égale ou supérieure à la distance (a) entre l'articulation (16) et l'arête de coupe (8).

2. Tête de perçage selon la revendication 1, dans laquelle l'axe de l'actionneur piézoélectrique (18, 20) s'étend approximativement à angle droit par rapport à la direction d'avance.

3. Tête de perçage selon la revendication 1 ou 2, avec un système de mesure de déplacement (46) pour détecter le mouvement d'avance et/ou la course de l'actionneur.

4. Tête de perçage selon la revendication 1, dans laquelle le système de mesure de déplacement est disposé dans la zone située entre l'actionneur piézoélectrique (18, 20) et l'arête de coupe (8) .

5. Tête de perçage selon l'une des revendications précédentes, avec un dispositif de précontrainte pour agir sur l'articulation solide (12) ou l'actionneur piézoélectrique (18, 20) dans le sens du retour.

6. Tête de perçage selon la revendication 5, dans laquelle le dispositif de précontrainte est un actionneur piézoélectrique.

7. Tête de perçage selon l'une des revendications précédentes, avec une électronique (36) pour commander l'actionneur piézoélectrique (18, 20) en fonction de valeurs de consigne prédéfinies, d'une position angulaire de l'arête de coupe (8) et/ou de la valeur réelle détectée par le système de mesure de déplacement (46).

8. Tête de perçage selon la revendication 7, dans laquelle l'électronique (36) présente un régulateur d'outil (68) qui, en fonction du signal d'angle de rotation et d'une valeur de consigne prédéfinie, commande l'actionneur piézoélectrique (18, 20) au moyen d'un amplificateur (72), le déplacement de l'actionneur piézoélectrique (18, 20) pouvant être détecté par le système de mesure de déplacement (46) et étant retransmis au régulateur d'outil (68) en tant que position réelle.

9. Tête de perçage selon l'une des revendications précédentes, avec un porte-outil (6) pour un outil présentant l'arête de coupe (8).

10. Tête de perçage selon la revendication 9, dans laquelle l'articulation solide (12) porte le porte-outil (6) et l'articulation (16) est formée par deux fentes radiales (40, 54) s'étendant en sens contraires, qui sont de préférence décalées dans la direction axiale.

11. Tête de perçage selon la revendication 10, dans laquelle une fente radiale plus longue (54) s'étend au-delà d'un axe (56) de la tête de perçage (1) et l'autre fente radiale (40) est formée de manière sensiblement plus courte.

12. Tête de perçage selon l'une des revendications précédentes, dans laquelle deux actionneurs piézoélectriques (18, 20) sont disposés sur un cercle primitif commun à distance d'une articulation (16) de l'articulation solide (12).

13. Broche avec une tête de perçage selon l'une des revendications précédentes, dans laquelle l'électronique (36) est intégrée dans la tête de perçage (1) ou dans la broche (4).

14. Broche selon la revendication 13, avec une interface pour transmettre un signal de consigne à l'électronique (36), dans laquelle l'interface est formée du côté de la broche ou de la tête de perçage.

15. Procédé pour l'usinage de précision de plusieurs pièces, présentant les étapes suivantes : perçage de précision d'un perçage d'une première pièce au moyen d'une tête de perçage (1) selon l'une des revendications 1 à 12, lissage du perçage au moyen d'un outil de lissage, et comprenant une étape de mesure pour vérifier la précision dimensionnelle du perçage de la première pièce et un usinage correspondant des perçages d'au moins une autre pièce, la mesure étant effectuée après le lissage du perçage de la première pièce et une correction du réglage d'outil de la tête de perçage (1) étant effectuée en fonction du résultat de mesure après le lissage.
